# EUROPEAN PATENT APPLICATION

(11) **EP 4 553 912 A1**
(43) Date of publication of application: **14.05.2025**
(21) Application number: 24210449.5
(22) Date of filing: 04.11.2024
(51) Int. Cl.: H01M 4/04, H01M 4/36, H01M 4/505, H01M 4/525, H01M 4/58, H01M 4/66, H01M 10/0525, H01M 10/42, H01M 50/531, H01M 4/02

(54) **ELECTRODE FOR RECHARGEABLE LITHIUM BATTERY, ELECTRODE ASSEMBLY, AND RECHARGEABLE LITHIUM BATTERY INCLUDING THE SAME**

(30) Priority: 09.11.2023 KR 20230154659
(71) Applicant: Samsung SDI Co., Ltd., Yongin-si, Gyeonggi-do 17084 (KR)
(72) Inventor: Ha, Jaehwan, 17084 Gyeonggi-do (KR); Kim, Duckhyun, 17084 Gyeonggi-do (KR); Lee, Dong Myung, 17084 Gyeonggi-do (KR); Yoo, Heeeun, 17084 Gyeonggi-do (KR)
(74) Representative: Michalski Hüttermann & Partner Patentanwälte mbB

(57) **Abstract**

An electrode for a rechargeable lithium battery, and an electrode assembly and a rechargeable lithium battery including the same are provided. The electrode for a rechargeable lithium battery includes a current collector including a substrate and a substrate tab extending from one end of the substrate; an electrode active material layer on the substrate; and a heat dissipating coating layer on the substrate tab.

## Description

### BACKGROUND

### 1. Field

The present disclosure relates to electrodes for a rechargeable lithium battery, electrode assemblies including the same, and a rechargeable lithium battery.

### 2. Description of the Related Art

Recently, with the rapid spread (and/or development) of electronic devices that utilize batteries, such as mobile phones, laptop computers, and/or electric vehicles, the demand for rechargeable batteries with relatively high energy density and relatively high capacity is rapidly increasing. Accordingly, research and development to improve the performance of rechargeable lithium batteries are being actively pursued (underway).

A rechargeable lithium battery includes a positive electrode and a negative electrode, each including an active material capable of intercalating and deintercalating lithium ions, and an electrolyte. Electrical energy is produced through oxidation and reduction reactions if (e.g., when) lithium ions are intercalated/deintercalated from the positive electrode and negative electrode.

The positive and negative electrodes of the rechargeable lithium battery may have different areas (e.g., surface areas). Accordingly, if (e.g., when) a substrate tab of an electrode with a smaller area (e.g., positive electrode) contacts an active material layer of an electrode with a larger area (e.g., negative electrode), a short circuit may occur (e.g., easily occur). The short circuit may cause exothermicity (exothermic reaction) of the rechargeable lithium battery and furthermore, may cause its ignition.

In addition, if (e.g., when) the rechargeable lithium battery is rapidly charged or operated at relatively high output, a large amount of current may be concentrated on the positive and/or negative electrode substrate tab. This also may cause the heat generation and/or ignition of the rechargeable lithium battery.

In order to solve these problems, the positive and/or negative electrode substrate tab may be generally or suitably coated with ceramics in order to electrically insulate it. However, while the ceramics may have excellent or suitable insulating properties, they also have relatively low (e.g., very low) heat dissipating properties. Accordingly, the ceramic-coating of the positive and/or negative electrode substrate tab has a limit in suppressing or reducing (e.g., is limited in its ability to suppress or reduce) the heat generation and/or ignition of the rechargeable lithium battery.

### SUMMARY

Aspects according to one or more embodiments are directed toward an electrode for a rechargeable lithium battery that can effectively suppress or reduce heat generation and ignition of a rechargeable lithium battery in various situations such as short circuit, rapid charging, and/or relatively high output operation.

Aspects according to one or more embodiments are directed toward an electrode assembly including the electrode.

Aspects according to one or more embodiments are directed toward a rechargeable lithium battery including the electrode assembly. Additional aspects will be set forth in part in the description which follows and, in part, will be apparent from the description, or may be learned by practice of the presented embodiments of the disclosure.

According to one or more embodiments, an electrode for a rechargeable lithium battery includes a current collector including a substrate and a substrate tab extending from one end of the substrate; an electrode active material layer on the substrate; and a heat dissipating coating layer on the substrate tab and including a heat dissipating material.

According to one or more embodiments, an electrode assembly for a rechargeable lithium battery includes a stack in which a negative electrode, a separator, and a positive electrode are sequentially stacked, wherein at least one electrode of the negative electrode or the positive electrode is the aforementioned electrode according to one or more embodiments.

According to one or more embodiments, a rechargeable lithium battery includes the aforementioned electrode assembly according to one or more embodiments and an electrolyte.

The electrode according to one or more embodiments can effectively suppress or reduce heat generation and/or ignition of a rechargeable lithium battery in various situations, such as short circuit occurrence, rapid charging, and/or relatively high output operation.

Accordingly, the safety and reliability of the electrode assembly and rechargeable lithium battery including the electrode according to one or more embodiments may be improved.

### BRIEF DESCRIPTION OF THE DRAWINGS

The accompanying drawings are included to provide a further understanding of the present disclosure and are incorporated in and constitute a part of this specification. The drawings illustrate embodiments of the present disclosure and, together with the description, serve to explain principles of the present disclosure. In the drawings:
FIG. 1 is a schematic illustration of an electrode according to some embodiments.
FIG. 2 is a schematic illustration of an electrode according to some embodiments.
FIG. 3 is a schematic illustration of an electrode according to some embodiments.
FIG. 4 is a schematic illustration of an electrode according to some embodiments.
FIG. 5 is a schematic illustration of a cylindrical battery according to some embodiments.
FIG. 6 is a schematic illustration of a prismatic battery according to some embodiments.
FIG. 7 is a schematic illustration of a pouch-type or kind battery according to some embodiments.
FIG. 8 is a schematic illustration of a pouch-type or kind battery according to some embodiments.

### DETAILED DESCRIPTION

Hereinafter, embodiments of the present disclosure will be described in more detail. However, these embodiments are examples, the present disclosure is not limited thereto and scope of the present disclosure is defined by the claims and equivalents thereof.

As used herein, if (e.g., when) specific definition is not otherwise provided, it will be understood that if (e.g., when) an element such as a layer, film, region, or substrate is referred to as being "on" another element, it can be directly on the other element or intervening elements may also be present.

As used herein, if (e.g., when) specific definition is not otherwise provided, the singular expression may also include the plural expression. In addition, unless otherwise specified, the term "A or B" may refer to "including A, including B, or including A and B."

As used herein, the term "combination thereof' may refer to a mixture, a stack, a composite, a copolymer, an alloy, a blend, and a reaction product of the constituents.

As used herein, if (e.g., when) a definition is not otherwise provided, a particle diameter may be an average particle diameter. This average particle diameter refers to an average particle diameter (D50), which is a diameter of particles with a cumulative volume of 50 volume% in the particle size distribution. The average particle diameter (D50) can be measured by any suitable methods in the related art, for example, by measuring with a particle size analyzer, a transmission electron microscope, or a scanning electron microscope. In one or more embodiments, a dynamic light-scattering measurement device is utilized to perform a data analysis, and the number of particles is counted for each particle size range. From this, the average particle diameter (D50) value may be obtained (e.g., easily obtained) through calculation. A laser diffraction method may also be utilized. When measuring by laser diffraction, for example, the particles to be measured are dispersed in a dispersion medium and then introduced into a commercially available laser diffraction particle size measuring device (e.g., MT 3000 available from Microtrac, Inc.) utilizing ultrasonic waves at about 28 kHz, and after irradiation with an output of 60 W, the average particle diameter (D50) based on 50% of the particle size distribution in the measuring device can be calculated.

As used herein, the term "thickness" may be measured, for example, through an image taken with an optical or electron microscope, such as a scanning electron microscope.

As used herein, the term "end" refers to the end or edge of a structure.

In the present specification, the term "heat dissipation properties" refers to properties of dissipating heat generated from a specific component and suppressing or reducing a temperature increase of a product including the component.

In the present specification, the term "electrical insulation properties" refers to properties of "not conducting electricity" and is distinguished from the "heat dissipation properties," which is a concept of "dissipating heat."

In the present specification, the term "heat dissipating material" refers to a material concurrently (e.g., simultaneously) having the heat dissipation and electrical insulation properties, and the term "heat dissipating coating layer" refers to a coating layer concurrently (e.g., simultaneously) having the heat dissipation and electrical insulation properties.

In the present specification, the term "insulating material" refers to a material having the electrical insulation properties alone without the heat dissipation properties, and the term "insulation coating layer" refers to a coating layer having the electrical insulation properties alone without the heat dissipation properties.

### Electrode

According to one or more embodiments, an electrode for a rechargeable lithium battery includes a current collector including a substrate and a substrate tab extending from one end of the substrate; an electrode active material layer on the substrate; and a heat dissipating coating layer on the substrate tab and including a heat dissipating material (a material concurrently having the heat dissipation and electrical insulation properties).

The electrode according to one or more embodiments has an "electrically insulating property" of a heat-dissipating coating layer on the substrate tab, thereby preventing direct current flow from the current collector to the active material layer (e.g., in the event of a short circuit), thereby inducing a reduction in Joule heat and suppressing or reducing heat generation and ignition of the rechargeable lithium battery.

In one or more embodiments, even if (e.g., when) a large amount of current is concentrated on the base tab due to rapidly charging the rechargeable lithium battery or operating it at a relatively high output, the electrode according to one or more embodiments may suppress or reduce the heat generation and ignition of the rechargeable lithium battery due to the "heat dissipation properties" of the heat dissipating coating layer on the substrate tab.

Accordingly, the electrode according to one or more embodiments may improve safety and reliability of an electrode assembly and a rechargeable lithium battery cell including the same.

Hereinafter, an electrode according to one or more embodiments will be described in more detail.

### Structure of Electrode

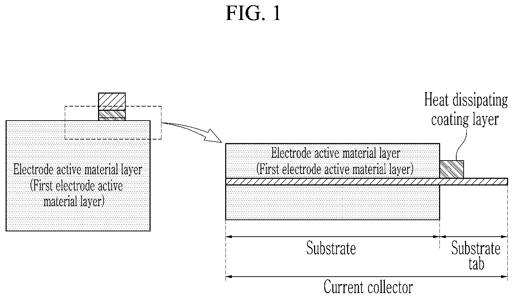

FIGs. 1 to 4 schematically show electrodes according to one or more embodiments, respectively.

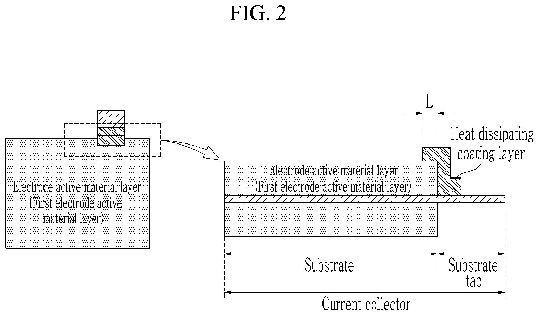

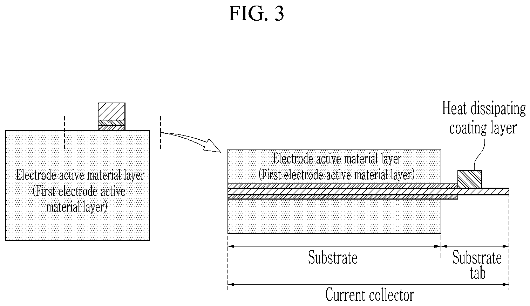

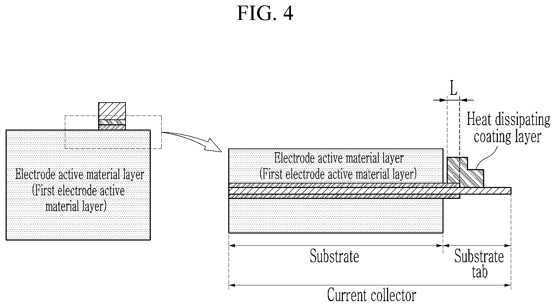

FIGs. 1 and 2 show a structure in which the electrode active material layer includes (e.g., consists of) one layer (single-layer structure), and FIGs. 3 and 4 show a structure in which the electrode active material layer includes (e.g., consists of) two or more layers (multi-layer structure).

In one or more embodiments, FIGs. 1 and 3 show a structure in which the heat dissipating coating layer concurrently (e.g., simultaneously) covers a side portion of the positive electrode active material layer and a portion of an uncoated region of the aluminum substrate, but does not cover other portions (e.g., the upper portion, the lower portion, etc.) of the positive electrode active material layer at all, and FIGs. 2 and 4 show a structure in which the heat dissipating coating layer concurrently (e.g., simultaneously) covers a portion of an upper portion of the positive electrode active material layer, a side portion of the positive electrode active material layer, and a portion of the uncoated region of the aluminum substrate.

When formed as shown in the structure of FIGs. 2 and 4, compared with the structure of FIGs. 1 and 3, the heat dissipating coating layer may effectively dissipate even the heat generated from the electrode active material layer.

In one or more embodiments, in the structure of FIGs. 2 and 4, a width (e.g., along a width direction perpendicular or normal toa length direction and a thickness direction) of the upper portion of the electrode active material layer covered by the heat dissipating coating layer may be about 0.1 mm to about 3 mm, about 0.3 mm to about 2.5 mm, or about 0.5 mm to about 2 mm. Within these ranges, a heat dissipation effect can be achieved without deteriorating the performance of the electrode.

For convenience of explanation, FIGs. 1 to 4 show that the heat dissipating coating layer is respectively formed on both surfaces (e.g., opposite surfaces or sides) of the substrate tab (double-sided coating), however, the present disclosure is not limited thereto and the heat dissipating coating layer may be formed only on one surface of the substrate tab (single-sided coating).

Compared with the single-sided coating, the double-sided coating may dissipate more heat (e.g., all the heat) generated inside and outside the rechargeable lithium battery, thereby more effectively suppressing or reducing the heat generation and ignition of the rechargeable lithium battery.

### Thermal Conductivity of Heat Dissipating Coating Layer

An insulation coating layer including any suitable insulating materials (e.g., alumina) may have a thermal conductivity of about 30 W/m K.

In contrast, the heat dissipating (e.g., exothermic) coating layer may exhibit higher (e.g., superbly higher) thermal conductivity than the related art insulation coating layer. For example, the heat dissipating coating layer may have a thermal conductivity of greater than or equal to about 100 W/m·K, greater than or equal to about 200 W/m·K, or greater than or equal to about 300 W/m·K. The thermal conductivity of the heat dissipating coating layer has no particular upper limit but may be less than or equal to about 1,000 W/m·K.

The thermal conductivity of the heat dissipating coating layer or the insulation coating layer may be respectively measured by utilizing a thermal analysis equipment (product name: LFA467 HyperFlash, manufacturer: NETZSCH) according to a scintillation method.

For example, the heat dissipating coating layer or the insulation coating layer may be formed to be about 20 µm thick on an aluminum or copper substrate to manufacture a specimen. The side of the specimen where the heat dissipating coating layer or the insulation coating layer is formed is referred to as a "front side" and the other side where the heat dissipating coating layer is not formed, is referred to as a "back side."

While the front side of the specimen is heated by utilizing laser pulses from the thermal analysis equipment, the temperature of the back side of the specimen is measured to evaluate thermal conductivity.

### Heat Dissipating Material

In the electrode according to one or more embodiments, the heat dissipating material may be a conductive material.

The conductive material as the heat dissipating material may include an electronic conductive material that has both (e.g., simultaneously) heat dissipation and insulation properties, and may include a carbon-based material, a metal-based material, a conductive polymer, and/or a (e.g., any suitable) mixture thereof.

For example, the conductive material as the heat dissipating material may include a carbon-based material such as natural graphite, artificial graphite, carbon black, acetylene black, ketjen black, and/or carbon fiber; a metallic material containing copper, nickel, aluminum, silver, and/or the like, and in the form of metal powder or metal fiber; a conductive polymer such as a polyphenylene derivative; and/or a (e.g., any suitable) combination thereof.

The conductive material as the heat dissipating material may be included in an amount of about 0.1 wt% to about 30 wt%, about 0.5 wt% to about 30 wt%, or about 5 wt% to about 30 wt%, based on 100 wt% of the heat dissipating coating layer.

Within these ranges, the heat dissipating coating layer may exhibit appropriate or suitable heat dissipation and insulating properties.

### Ceramic

The heat dissipating coating layer may further include ceramic (e.g., a ceramic material).

The ceramics may be divided into general ceramics and endothermic ceramics. The general ceramic is an insulating material that only has insulating properties, and the endothermic ceramic is an insulating material that has both (e.g., simultaneously) insulating and endothermic properties.

In this specification, the term "endothermic properties" refers to the characteristic of "absorbing heat" from the surroundings, and is distinguished from "heat dissipating," which is a concept of "dissipating heat."

For example, the ceramic may include an endothermic ceramic such as pseudoboehmite and boehmite; a general ceramic such as aluminum oxide (AlO₃, Al₂O₃, and/or the like), silicon dioxide (SiO₂), magnesium oxide (MgO), titanium dioxide (TiO₂), hafnium oxide (HfO₂), tin oxide (SnO), cerium (IV) oxide (CeO₂), nickel oxide (NiO), zinc oxide (ZnO), calcium oxide (CaO), zirconium oxide (ZrO₂), yttrium oxide (Y₂O₃), and/or silicon carbide (SiC); and/or a (e.g., any suitable) combination thereof.

If (e.g., when) only the endothermic ceramic is utilized or the endothermic ceramic is utilized in combination with the general ceramic, the safety of the electrode can be improved compared to the case where the general ceramic alone is utilized.

The ceramic may be included in an amount of about 30 wt% to about 95 wt%, about 50 wt% to about 80 wt%, or about 50 wt% to about 75 wt%, based on 100 wt% of the heat dissipating coating layer.

Within these ranges, the heat dissipating coating layer can appropriately or suitably exhibit insulating and/or endothermic properties.

### Binder

The heat dissipating coating layer may further include a binder.

The binder may serve to adhere (e.g., well adhere) the materials in the heat dissipating coating layer to each other and to adhere the heat dissipating coating layer to the substrate tab.

The binder may include a water-insoluble binder, a water-soluble binder, and/or a (e.g., any suitable) combination thereof.

The water-insoluble binder may include polyvinylchloride, carboxylated polyvinylchloride, polyvinylfluoride, an ethylene oxide-containing polymer, an ethylene propylene copolymer, polystyrene, polyvinylpyrrolidone, polyurethane, polytetrafluoroethylene, polyvinylidene fluoride, polyethylene, polypropylene, polyamideimide, polyimide, and/or a (e.g., any suitable) combination thereof.

Examples of the water-soluble binder include a rubber-based binder or a polymer resin binder. The rubber-based binder may be selected from among a styrene-butadiene rubber (SBR), an acrylated styrene-butadiene rubber, an acrylonitrile-butadiene rubber (ABR), an acrylic rubber, a butyl rubber, a fluorine rubber, and/or a (e.g., any suitable) combination thereof. The polymer resin binder may be selected from among polyethyleneoxide, polyvinylpyrrolidone, polyepichlorohydrin, polyphosphazene, polyacrylonitrile, an ethylene propylene diene copolymer, polyvinylpyridine, chlorosulfonated polyethylene, latex, a polyester resin, an acrylic resin, a phenol resin, an epoxy resin, polyvinyl alcohol, and/or a (e.g., any suitable) combination thereof.

When a water-soluble binder is utilized as the binder, a cellulose-based compound capable of imparting viscosity may be further included. The cellulose-based compound may include one or more types (kinds) of carboxylmethyl cellulose, hydroxypropylmethyl cellulose, methyl cellulose, or alkali metal salts thereof. The alkali metal may be Na, K, or Li.

The binder may be included in an amount of about 1 wt% to about 40 wt%, about 5 wt% to about 35 wt%, or about 8 wt% to about 30 wt% based on 100 wt% of the heat dissipating coating layer.

Within these ranges, the materials in the heat dissipating coating layer can be adhered (e.g., well adhered) to each other and the heat dissipating coating layer can be adhered (e.g., well adhered) to the substrate tab.

### Thickness of Heat Dissipating Coating Layer

A thickness of the heat dissipating coating layer may be about 0.5 µm to about 40 µm, about 2 µm to about 35 µm, or about 5 µm to about 30 µm.

Within these ranges, the heat dissipating coating layer may exhibit appropriate or suitable heat dissipation and insulating properties.

### Width of Heat Dissipating Coating Layer

A width (e.g., along a width direction perpendicular or normal to a length direction and a thickness direction) of the heat dissipating coating layer may be about 0.1 mm to about 10 mm, about 0.5 mm to about 8 mm, or about 1 mm to about 5 mm. Within these ranges, the heat dissipating coating layer may exhibit appropriate or suitable heat dissipation and insulating properties.

### Electrode Active Material Layer (Positive Electrode Active Material Layer)

The electrode active material layer may have a single-layer structure including (e.g., consisting of) only the first electrode active material layer, or may have a multi-layer structure including the first electrode active material layer and the second electrode active material layer.

The first electrode active material layer may include a first electrode active material.

For example, if (e.g., when) the electrode is a positive electrode, the first electrode active material may be a compound (lithiated intercalation compound) capable of intercalating and deintercalating lithium. For example, one or more types (kinds) of composite oxides of lithium and a metal selected from among cobalt, manganese, nickel, and/or a (e.g., any suitable) combination thereof may be utilized.

The composite oxide may be a lithium transition metal composite oxide, and examples thereof may include lithium nickel-based oxide, lithium cobalt-based oxide, lithium manganese-based oxide, a lithium iron phosphate-based compound, cobalt-free lithium nickel-manganese-based oxide, and/or a (e.g., any suitable) combination thereof.

As an example, a compound represented by any of (e.g., selected from among) the following chemical formulas may be utilized: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O₂₋ₐDₐ (0.90≤a≤1.8, 0≤b≤0.5, 0≤c≤0.5, 0<α<2); LiₐNi_{1-b-c}Mn_{b}X_{c}O_{2-α}O_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1 ); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above chemical formulas, A is Ni, Co, Mn, and/or a (e.g., any suitable) combination thereof; X is Al, Ni, Co, Mn, Cr, Fe, Mg, Sr, V, a rare earth element, and/or a (e.g., any suitable) combination thereof; D is O, F, S, P, and/or a (e.g., any suitable) combination thereof; G is Al, Cr, Mn, Fe, Mg, La, Ce, Sr, V, and/or a (e.g., any suitable) combination thereof; and L¹ is Mn, Al, and/or a (e.g., any suitable) combination thereof.

The first electrode active material may include, for example, a lithium nickel-based oxide represented by Chemical Formula 11, a lithium cobalt-based oxide represented by Chemical Formula 12, a lithium iron phosphate-based compound represented by Chemical Formula 13, a cobalt-free lithium nickel-manganese-based oxide represented by Chemical Formula 14, and/or a (e.g., any suitable) combination thereof.

Chemical Formula 11 Liₐ₁₁Niₓ₁₁M¹¹_{y1}M¹²_{z11}O_{2-b11}X_{b11}

In Chemical Formula 11, 0.9≤a11≤1.8, 0.3≤x11≤1, 0≤y11≤0.7, 0≤z11≤0.7, 0.9≤x11+y11+z11≤1.1, and 0≤b11≤0.1, M¹¹ and M¹² are each independently one or more elements selected from among Al, B, Ba, Ca, Ce, Co, Cr, Cu, Fe, Mg, Mn, Mo, Nb, Si, Sn, Sr, Ti, V, W, and Zr, and X is one or more elements selected from among F, P, and S.

In Chemical Formula 11, in an embodiment, 0.6≤x11≤1, 0≤y11≤0.4, and 0≤z11≤0.4, or 0.8≤x11≤1, 0≤y11≤0.2, and 0≤z11≤0.2.

Chemical Formula 12 Liₐ₁₂COₓ₁₂M¹³_{y2}O_{2-b12}X_{b12}

In Chemical Formula 12, 0.9≤a12≤1.8, 0.7≤x12≤1, 0≤y12≤0.3, 0.9≤x12+y12≤1.1, and 0≤b12≤0.1, M¹³ is one or more elements selected from among Al, B, Ba, Ca, Ce, Cr, Cu, Fe, Mg, Mn, Mo, Ni, Se, Si, Sn, Sr, Ti, V, W, Y, Zn, and Zr, and X is one or more elements selected from among F, P, and S.

Chemical Formula 13 Liₐ₁₃Feₓ₁₃M¹⁴_{y13}PO_{4-b13}X_{b13}

In Chemical Formula 13, 0.9≤a13≤1.8, 0.6≤x13≤1, 0≤y13≤0.4, and 0≤b3≤0.1, M¹⁴ is one or more elements selected from among Al, B, Ba, Ca, Ce, Co, Cr, Cu, Mg, Mn, Mo, Ni, Se, Si, Sn, Sr, Ti, V, W, Y, Zn, and Zr, and X is one or more elements selected from among F, P, and S.

Chemical Formula 14 Liₐ₁₄Niₓ₁₄Mn_{y14}M¹⁵_{z14}O_{2-b14}X_{b14}

In Chemical Formula 14, 0.9≤a14≤1.8, 0.8≤x14<1, 0<y14≤0.2, 0≤z14≤0.2, 0.9≤x14+y14+z14≤1.1, and 0≤b14≤0.1, M¹⁵ is one or more elements selected from among Al, B, Ba, Ca, Ce, Cr, Fe, Mg, Mo, Nb, Si, Sn, Sr, Ti, V, W, and Zr, and X is one or more elements selected from among F, P, and S.

As an example, the positive electrode active material may be a relatively high nickel-based positive electrode active material having a nickel content (e.g., amount) of greater than or equal to about 80 mol%, greater than or equal to about 85 mol%, greater than or equal to about 90 mol%, greater than or equal to about 91 mol%, or greater than or equal to about 94 mol%, and less than or equal to about 99 mol% based on 100 mol% of metals excluding lithium in the lithium transition metal composite oxide. The relatively high nickel-based positive electrode active materials can achieve relatively high capacity and can be applied to relatively high-capacity, relatively high-density rechargeable lithium batteries.

The first electrode active material layer includes the first electrode active material and may further include a binder and/or a conductive material. Herein, a content (e.g., amount) of the first electrode active material may be about 90 wt% to about 98 wt%, for example, about 90 wt% to about 95 wt%, based on a total weight of the first active material layer. Each content (e.g., amount) of the binder and the conductive material may be about 1 wt% to about 5 wt% based on a total weight of the first electrode active material layer.

The binder may adhere (e.g., well adhere) the first electrode active material particles to each other and may also cause the first electrode active material to adhere (e.g., well adhere) to the current collector. The description of the binder is the same as the binder constituting the heat dissipating coating layer.

The conductive material is utilized to provide conductivity to the first electrode active material layer, and its description is the same as that of the conductive material constituting the heat dissipating coating layer.

The second electrode active material layer may include a second electrode active material.

For example, if (e.g., when) the electrode is a positive electrode, the second electrode active material may include a compound represented by Chemical Formula 1, a compound represented by Chemical Formula 2, and/or a (e.g., any suitable) combination thereof:

Chemical Formula 1 Liₐ₁M¹ₓ₁Fe₍₁₋ₓ₁₎PO₄

wherein, in Chemical Formula 1, 0.90 ≤ a1 ≤1.5, 0 ≤ x1 ≤ 0.4, and M¹ is Mg, Co, Ni, and/or a (e.g., any suitable) combination thereof. The compound represented by Chemical Formula 1 may be a lithium iron phosphate-based compound. A mole fraction of lithium in Formula 1 may be appropriately or suitably adjusted between about (approximately) 0.9 and about 1.5, for example, 0.90 ≤ a1 ≤ 1.2, or 0.95 ≤ a1 ≤ 1.1.

Chemical Formula 2 Liₐ₂Mnₓ₂Fe₍₁₋ₓ₂₎PO₄

wherein, in Chemical Formula 2, 0.90 ≤ a2 ≤ 1.5, and 0.1 ≤ x2 ≤ 1.

In one or more embodiments, in Chemical Formula 2, Mn may be present in addition to Fe, and its mole fraction may be 0 ≤ x2 ≤ 0.7, 0 ≤ x2 ≤ 0.5, 0 ≤ x2 ≤ 0.3, 0 ≤ x2 ≤ 0.1 or 0 ≤ x2 ≤ 0.05.

The compound represented by Chemical Formula 2 may be a lithium manganese iron phosphate-based compound (lithium manganese iron phosphate). In one or more embodiments, in Chemical Formula 2, a mole fraction of lithium may be 0.90 ≤ a2 ≤1.2 or 0.95 ≤ a2 ≤1.1, similar to Chemical Formula 1. In Chemical Formula 2, a mole fraction of manganese may be 0.2 ≤ x2 ≤ 0.9, 0.3 ≤ x2 ≤ 0.9, or 0.4 ≤ x2 ≤ 0.8. In one embodiment, if (e.g., when) 0.5 ≤ x2 ≤ 0.9, the lithium ion conduction ability may be relatively high.

For example, the second electrode active material layer may include LiFePO₄, LiMn_{0.5}Fe_{0.5}PO₄, LiMnPO₄, and/or the like, as the lithium iron phosphate compound.

The second electrode active material layer includes the second electrode active material and may further include a binder and/or a conductive material. Herein, a content (e.g., amount) of the second electrode active material may be about 90 wt% to about 98 wt%, for example, about 90 wt% to about 95 wt%, based on a total weight of the second electrode active material layer. Each content (e.g., amount) of the binder and the conductive material may be about 1 wt% to about 5 wt% based on a total weight of the second electrode active material layer.

The binder can adhere (e.g., well adhere) the second electrode active material particles to each other and the second electrode active material to the current collector, and its description is the same as that of the binder constituting the heat dissipating coating layer.

The conductive material is utilized to provide conductivity to the second electrode, and its description is the same as that of the conductive material constituting the heat dissipating coating layer.

In one or more embodiments, the second electrode active material layer has a larger area (e.g., surface area) than the first electrode active material layer and thus may cover a portion of the substrate tab, thereby further improving the safety of the electrode.

In one or more embodiments, based on a total area of the substrate tab, the area where the second electrode active material layer covers a portion of the electrode substrate tab may be (greater than about 0 area% and) less than or equal to about 60 area%, greater than or equal to about 3 area% and less than or equal to about 50 area%, or greater than or equal to about 6 area% and less than or equal to about 40 area%. The total area is for example defined by the area obtained by the length and width of product such as the substrate tab.

Additionally, a width of the second electrode active material layer may be about 0.1 mm to about 5 mm, about 0.5 mm to about 4 mm, or about 1 mm to about 3 mm longer than a width of the first electrode active material layer.

### Current Collector

The current collector includes a substrate and a substrate tab extending from one end of the substrate.

The width of the substrate tab may be about 2 mm to about 7 mm, about 3 mm to about 6 mm, or about 3.5 mm to about 5 mm.

If (e.g., when) the electrode according to one or more embodiments is a positive electrode, aluminum foil may be utilized as the current collector, but the present disclosure is not limited thereto.

### Electrode Assembly and Rechargeable Lithium Battery

According to one or more embodiments, an electrode assembly for a rechargeable lithium battery includes a stack in which a negative electrode, a separator, and a positive electrode are sequentially stacked, wherein at least one electrode of the negative electrode or the positive electrode is the aforementioned electrode according to one or more embodiments.

According to one or more embodiments, a rechargeable lithium battery includes the aforementioned electrode assembly according to one or more embodiments and an electrolyte.

The safety and reliability of an electrode assembly and a rechargeable lithium battery including an electrode according to one or more embodiments may be improved.

### Positive Electrode Active Material and Positive Electrode

The electrode assembly and the rechargeable lithium battery may each include the aforementioned positive electrode according to one or more embodiments. In this case, the descriptions of the positive electrode active material and the positive electrode including the same are as described above.

Hereinafter, excluding descriptions that overlap with those described above, the electrode assembly and the rechargeable lithium battery will be described in more detail.

### Negative Electrode Active Material

The negative electrode active material may be a material that reversibly intercalates/deintercalates lithium ions, a lithium metal, a lithium metal alloy, a material capable of doping and dedoping lithium, or a transition metal oxide.

The material that reversibly intercalates/deintercalates lithium ions may include a carbon-based negative electrode active material, for example, crystalline carbon, amorphous carbon and/or a (e.g., any suitable) combination thereof. The crystalline carbon may be graphite such as irregular-shaped, sheet-shaped, flake-shaped, sphere-shaped, and/or fiber-shaped natural graphite or artificial graphite. The amorphous carbon may be a soft carbon, a hard carbon, a mesophase pitch carbonization product, calcined coke, and/or the like.

The lithium metal alloy may include lithium and a metal selected from among Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOₓ (0 < x ≤ 2), a Si-Q alloy (wherein Q is selected from among an alkali metal, an alkaline-earth metal, a Group 13 element, a Group 14 element (excluding Si), a Group 15 element, a Group 16 element, a transition metal, a rare earth element, and/or a (e.g., any suitable) combination thereof). The Sn-based negative electrode active material may include Sn, SnOₓ (0 < x ≤ 2) (e.g., SnO₂), a Sn-based alloy, and/or a (e.g., any suitable) combination thereof.

The silicon-carbon composite may be a composite of silicon and amorphous carbon. According to one or more embodiments, the silicon-carbon composite may be in a form of silicon particles and amorphous carbon coated on the surface of the silicon particles. For example, the silicon-carbon composite may include a secondary particle (core) in which primary silicon particles are assembled (e.g., agglomerated), and an amorphous carbon coating layer (shell) on the surface of the secondary particle. The amorphous carbon may also be between the primary silicon particles, and, for example, the primary silicon particles may be coated with the amorphous carbon. The secondary particle(s), e.g., a plurality of the secondary particles may be dispersed in an (the) amorphous carbon matrix.

The silicon-carbon composite may further include crystalline carbon. For example, the silicon-carbon composite may include a core (secondary particle) including crystalline carbon and (primary) silicon particles and an amorphous carbon coating layer on a surface of the core.

The Si-based negative electrode active material or the Sn-based negative electrode active material may be utilized in combination with a carbon-based negative electrode active material.

### Negative Electrode

The negative electrode for a rechargeable lithium battery includes a current collector and a negative electrode active material layer on the current collector. The negative electrode active material layer includes a negative electrode active material and may further include a binder and/or a conductive material.

For example, the negative electrode active material layer may include about 90 wt% to about 99 wt% of the negative electrode active material, about 0.5 wt% to about 5 wt% of the binder, and about 0 wt% to about 5 wt% of the conductive material.

The binder may serve to attach the negative electrode active material particles well to each other and also to attach the negative electrode active material well to the current collector. The binder may include a non-aqueous binder, an aqueous binder, a dry binder, and/or a (e.g., any suitable) combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or a (e.g., any suitable) combination thereof.

The aqueous binder may be selected from among a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and/or a (e.g., any suitable) combination thereof.

When an aqueous binder is utilized as the negative electrode binder, it may further include a cellulose-based compound capable of imparting viscosity. The cellulose-based compound includes one or more of carboxylmethyl cellulose, hydroxypropylmethyl cellulose, methyl cellulose, or alkali metal salts thereof. The alkali metal may be Na, K, or Li.

The dry binder may be a polymer material capable of being fiberized, and may be, for example, polytetrafluoroethylene, polyvinylidene fluoride, polyvinylidene fluoride-hexafluoropropylene copolymer, polyethylene oxide, and/or a (e.g., any suitable) combination thereof.

The conductive material is included to provide electrode conductivity, and any suitable electrically conductive material may be utilized as a conductive material unless it causes a chemical change (e.g., should not cause an undesirable chemical change in the rechargeable lithium battery). Examples of the conductive material may be a carbon-based material such as natural graphite, artificial graphite, carbon black, acetylene black, ketjen black, a carbon fiber, a carbon nanofiber, a carbon nanotube, and/or the like; a metal-based material such as copper, nickel, aluminum silver, and/or the like in a form of a metal powder or a metal fiber; a conductive polymer such as a polyphenylene derivative; and/or a (e.g., any suitable)mixture thereof.

The negative electrode current collector may include one selected from among a copper foil, a nickel foil, a stainless steel foil, a titanium foil, a nickel foam, a copper foam, a polymer substrate coated with a conductive metal, and/or a (e.g., any suitable) combination thereof, but the present disclosure is not limited thereto.

When the aforementioned electrode according to one or more embodiments is utilized as the positive electrode, the area of the negative electrode may be larger than the area of the positive electrode.

In this case, the width of the negative electrode may be about 0.5 mm to about 3 mm, about 0.7 mm to about 2.6 mm, or about 0.9 mm to about 2.4 mm longer than the width of the positive electrode.

### Electrolyte

The electrolyte for a rechargeable lithium battery includes a non-aqueous organic solvent and a lithium salt.

The non-aqueous organic solvent serves as a medium for transmitting (e.g., transporting) ions taking part in the electrochemical reaction of a battery.

The non-aqueous organic solvent may be a carbonate-based, ester-based, ether-based, ketone-based, alcohol-based solvent, aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethylacetate, methylpropionate, ethylpropionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. The ketone-based solvent may include cyclohexanone. The alcohol-based solvent may include ethyl alcohol, isopropyl alcohol, and/or the like, and the aprotic solvent may include nitriles such as R-CN (wherein R is a C2 to C20 linear, branched, or cyclic hydrocarbon group, a double bond, an aromatic ring, or an ether group), amides such as dimethylformamide, dioxolanes such as 1,3-dioxolane and/or 1,4-dioxolane, sulfolanes, and/or the like.

The non-aqueous organic solvent may be utilized alone or as a mixture of two or more.

Additionally, if (e.g., when) utilizing a carbonate-based solvent, cyclic carbonate and chain carbonate can be mixed and utilized, and cyclic carbonate and chain carbonate can be mixed at a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of a lithium salt may include one or more selected from among LiPF₆, LiBF₄, LiSbF₆, LiAsF₆, LiClO₄, LiAlO₂, LiAlCl₄, LiPO₂F₂, LiCl, Lil, LiN(SO₂C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (x and y are integers from 1 to 20), lithium trifluoromethane sulfonate, lithium tetrafluoroethanesulfonate, lithium difluorobis(oxalato)phosphate, (LiDFOB), and lithium bis(oxalato)borate (LiBOB).

### Separator

The rechargeable lithium battery may further include a separator between the negative electrode and the positive electrode, depending on a kind of the battery. Examples of a suitable separator material include polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

The separator may include a porous substrate and a coating layer including an organic material, an inorganic material, and/or a (e.g., any suitable) combination thereof on one or both surfaces (e.g., opposite surfaces or sides) of the porous substrate.

The porous substrate may be a polymer film formed of a polymer, a copolymer or a mixture of two or more selected from among polyolefin such as polyethylene and/or polypropylene, a polyester such as polyethyleneterephthalate, and/or polybutyleneterephthalate, polyacetal, polyamide, polyimide, polycarbonate, polyether ketone, polyaryl ether ketone, polyether imide, polyamideimide, polybenzimidazole, polyether sulfone, polyphenylene oxide, a cyclic olefin copolymer, polyphenylene sulfide, polyethylene naphthalate, a glass fiber, tetrafluoroethylene (e.g., TEFLON), and polytetrafluoroethylene.

The organic material may include a polyvinylidene fluoride-based polymer or a (meth)acrylic-based polymer.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, boehmite, and/or a (e.g., any suitable) combination thereof, but the present disclosure is not limited thereto.

The organic material and the inorganic material may be mixed in one coating layer, or a coating layer including an organic material and a coating layer including an inorganic material may be stacked.

### Rechargeable Lithium Battery

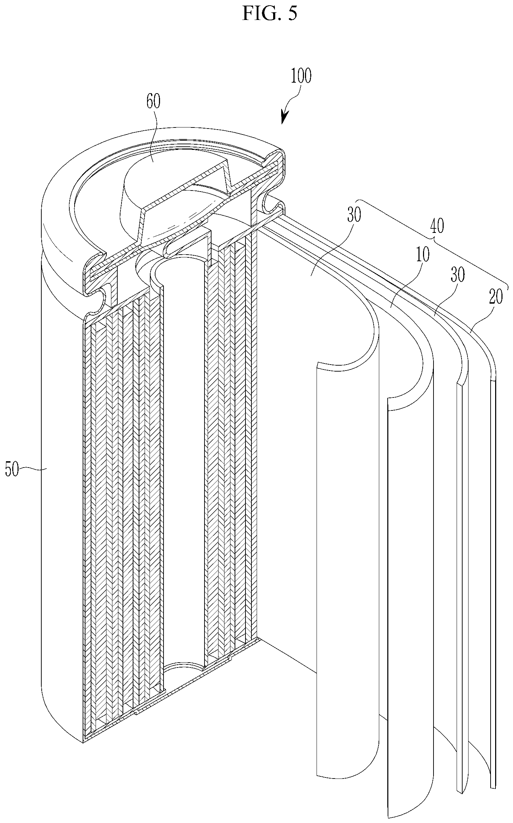

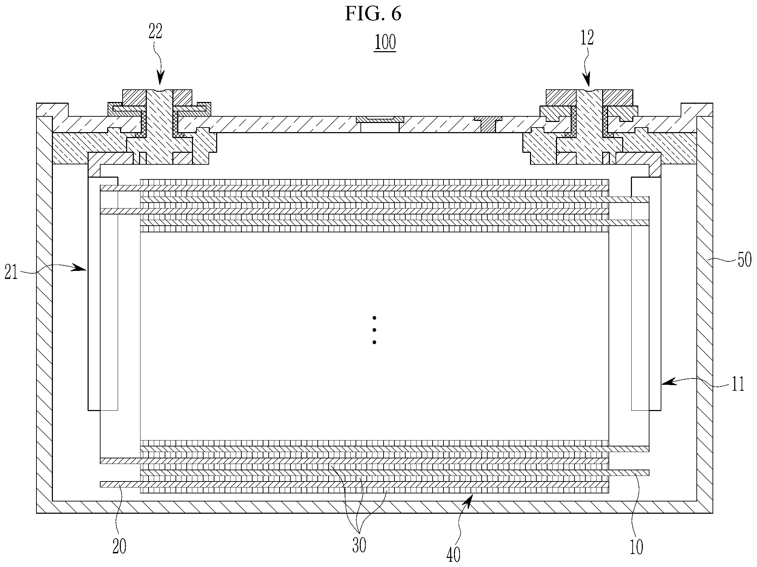

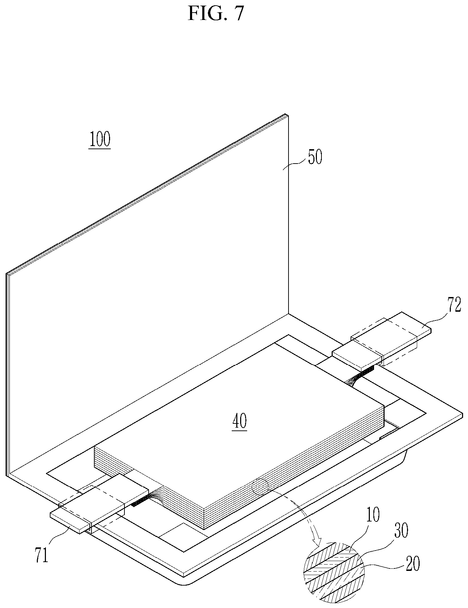

The rechargeable lithium battery may be classified into cylindrical, prismatic, pouch, or coin-type or kind batteries, and/or the like depending on the shape thereof. FIGs. 5 to 8 are schematic views illustrating a rechargeable lithium battery according to one or more embodiments. FIG. 5 shows a cylindrical battery, FIG. 6 shows a prismatic battery, and FIGs. 7 and 8 show pouch-type or kind batteries. Referring to FIGs. 5 to 8, the rechargeable lithium battery 100 includes an electrode assembly 40 including a separator 30 between a positive electrode 10 and a negative electrode 20, and a case in which the electrode assembly 40 is included. The positive electrode 10, the negative electrode 20, and the separator 30 may be impregnated with an electrolyte solution. The rechargeable lithium battery 100 may include a sealing member 60 sealing the case 50 as shown in FIG. 5. In one or more embodiments, in FIG. 6, the rechargeable lithium battery 100 may include a positive lead tab 11, a positive terminal 12, a negative lead tab 21, and a negative terminal 22. As shown in FIGs. 7 and 8, the rechargeable lithium battery 100 includes an electrode tab 70, that is, a positive electrode tab 71 and a negative electrode tab 72, serving as an electrical path for inducing (e.g., conducting) the current formed in the electrode assembly 40 to the outside.

The rechargeable lithium battery according to one or more embodiments may be applied to automobiles, mobile phones, and/or one or more suitable types (kinds) of electric devices, but the present disclosure is not limited thereto.

Hereinafter, examples of the present disclosure and comparative examples will be described. However, these are only examples, and the scope of the present disclosure is not limited to the following examples.

### Example 1

### (1) Manufacture of Positive Electrode

LiCoO₂ as a positive electrode active material, denka black, a type or kind of carbon black, as a conductive material, and polyvinylidene fluoride (PVdF) as a binder were mixed in a weight ratio of 92:4:4 and then, mixed with N-methylpyrrolidone (NMP) to prepare a positive electrode slurry.

The positive electrode slurry was coated to be 150 µm thick on one side (e.g., one surface) of an aluminum substrate to form (or provide) a positive electrode active material layer. The aluminum substrate has a width of 200 mm, the positive electrode active material layer is in the middle of the aluminum substrate and has a width of 160 mm while leaving 20 mm (based on the width) on each left side and right side of the aluminum substrate as an uncoated region. The other side (e.g., the other surface opposite to the one coated with the positive electrode slurry) of the aluminum substrate was equally treated to form (or provide) another positive electrode active material layer. The uncoated regions of the aluminum substrate were to be punched out in the last process of the present example in order to make a positive electrode substrate tab.

Independently from this, denka black, a type or kind of carbon black, as a heat dissipating material and a conductive material, boehmite, a type or kind of endothermic ceramic, as a ceramic, and polyvinylidene fluoride (PVdF) as a binder were mixed in a weight ratio of 0.5:79.5:20 and then, mixed with N-methylpyrrolidone (NMP) to prepare a heat dissipating coating layer slurry.

The heat dissipating coating layer slurry was coated to concurrently (e.g., simultaneously) cover a portion of the top of the positive electrode active material layer, side portions of the positive electrode active material layer, and a portion of the uncoated regions of the aluminum substrate and thus form (or provide) a 4 mm-wide and 20 µm-thick heat dissipating coating layer.

0.5 mm of the 4 mm of the width of the heat dissipating coating layer covered the portion of the top of the positive electrode active material layer, while the rest 3.5 mm of the width of the heat dissipating coating layer covered the portion of the uncoated regions of the aluminum current collector.

As aforementioned, the first positive electrode active material layer and the heat dissipating coating layer were sequentially formed and then, rolled, thereby manufacturing a positive electrode rolled body. The positive electrode rolled body was punched out at 50 mm (based on a width) from the left or right end by utilizing a cutting mold with a width of 50 mm * a length of 60 mm. Accordingly, in the positive electrode punched body, the uncoated regions of the aluminum substrate were additionally punched into a width 10 mm * a length 7 mm to form (or provide) a positive electrode substrate tab, finally obtaining a positive electrode.

### (2) Manufacture of Negative Electrode

Artificial graphite as a negative electrode active material, denka black as a conductive material, carboxylmethyl cellulose as a thickener, and a styrene butadiene rubber as a binder were mixed in a weight ratio of 97.3:0.5:0.9:1.3 and then, mixed with water, thereby preparing a negative electrode slurry.

The negative electrode slurry was coated to be 50 µm thick on one surface of a copper substrate to form (or provide) a negative electrode active material layer. The copper substrate has a width of 200 mm, the negative electrode active material layer is in the middle of the copper substrate and has a width of 160 mm while leaving 20 mm (based on the width) on each left side and right side of the copper substrate as an uncoated region. The other surface of the copper substrate was equally treated to form (or provide) another negative electrode active material layer.

In this way, the negative electrode active material layers on the copper substrate were rolled, forming (or providing) a negative electrode rolled body. The negative electrode rolled body was punched out at 54 mm (based on the width) from the left or right end by utilizing a cutting mold with a width of 54 mm * a length of 64 mm. Accordingly, in the negative electrode punched body, the uncoated regions of the copper substrate were additionally punched into a size of a width 10 mm * a length 7 mm to form (or provide) a negative electrode substrate tab, finally obtaining a negative electrode.

### (3) Electrode Assembly and Rechargeable Lithium Battery including the Same

After disposing a polyethylene separator between the positive electrode and the negative electrode to manufacture a laminate, the laminate was wound and pressed in a vertical direction, thereby manufacturing a stacked electrode assembly.

The stacked electrode assembly was housed in a pouch, and an electrolyte solution prepared by mixing ethylene carbonate and diethyl carbonate in a volume ratio of 50:50 and dissolving 1.0 M of LiPF₆ as the lithium salt in the mixed solvent was injected thereinto, thereby manufacturing a rechargeable lithium battery cell.

### Example 2

A positive electrode, an electrode assembly, and a rechargeable lithium battery cell were manufactured in substantially the same manner as in Example 1 except that the weight ratio of the heat dissipating material: the ceramic : the binder was changed into 5:75:20.

### Example 3

A positive electrode, an electrode assembly, and a rechargeable lithium battery cell were manufactured in substantially the same manner as in Example 1 except that the weight ratio of the heat dissipating material: the ceramic : the binder was changed into 10:70:20.

### Example 4

A positive electrode, an electrode assembly, and a rechargeable lithium battery cell were manufactured in substantially the same manner as in Example 1 except that the weight ratio of the heat dissipating material: the ceramic : the binder was changed into 20:60:20.

### Example 5

A positive electrode, an electrode assembly, and a rechargeable lithium battery cell were manufactured in substantially the same manner as in Example 1 except that the weight ratio of the heat dissipating material: the ceramic : the binder was changed into 30:50:20.

### Comparative Example 1

A positive electrode, an electrode assembly, and a rechargeable lithium battery cell were manufactured in substantially the same manner as in Example 1 except that the heat dissipating coating layer was not formed.

### Comparative Example 2

A positive electrode, an electrode assembly, and a rechargeable lithium battery cell were manufactured in substantially the same manner as in Example 1 except that the weight ratio of the ceramic : the binder was changed into 80:20 without utilizing the heat dissipating material.

### Evaluation Example 1: Safety Evaluation 1

In Safety Evaluation 1, after connecting the positive and negative electrodes by an external conductor to make a relatively high current rapidly flow, a substrate tab temperature of the positive electrode was measured. The detailed evaluation method is as follows.

Each of the rechargeable lithium battery cells of the examples and the comparative examples was charged with constant current-constant voltage (CC-CV) at 0.5 C to 4.45 V and cut off at 0.05 C into a SOC (state of charge) 100% (full charge).

The rechargeable lithium battery cell in the full charge state were placed and stored in an oven at 55 °C for 1 hour to make a surface temperature of the rechargeable lithium battery cells reach 55 °C.

In the 55 °C oven, the positive and negative electrodes of each of the rechargeable lithium battery cells were connected by an external conductor with a resistance of 80 mΩ to forcibly cause a short-circuit.

The short-circuited rechargeable lithium battery cell was evaluated with respect to safety by measuring a temperature of the positive electrode substrate tab with a thermocouple sensor, and the results are shown in Table 1.

### Evaluation Example 2: Safety Evaluation 2

Safety Evaluation 2 evaluated whether or not each of the rechargeable lithium battery cells was ignited by pressing a region where the heat dissipating coating layer was located on the substrate tab of the positive electrode. The detailed evaluation method is as follows.

Each of the rechargeable lithium battery cells of the examples and the comparative examples was charged at constant current-constant voltage (CC-CV) to 4.45 V at 0.5 C and cut off at 0.05 C into SOC (state of charge) 100% (full charge).

After placing each of the rechargeable lithium battery cells in the full charge state on a flat floor, the region where the heat dissipating coating layer was located on the substrate tab of the positive electrode was pressed with a metal rod with a diameter of 3 mm for 10 minutes. Accordingly, if (e.g., when) the rechargeable lithium battery cell was ignited, NG was given, but if (e.g., when) not ignited, OK was given, and the results are shown in Table 1.

**Table 1**

| | Composition of heat dissipating coating layer (wt%) | | | Thickness of heat dissipating | Evaluation of heat dissipating coating layer | |
|---|---|---|---|---|---|---|
| | conductive material | ceramic | binder | coating layer (µm) | safety Evaluation 1 (°C) | safety Evaluation 2 |
| Example 1 | 0.5 | 79.5 | 20 | 20 | 81 | OK |
| Example 2 | 5 | 75 | 20 | 20 | 75 | OK |
| Example 3 | 10 | 70 | 20 | 20 | 75 | OK |
| Example 4 | 20 | 60 | 20 | 20 | 73 | OK |
| Example 5 | 30 | 50 | 20 | 20 | 70 | OK |
| Comparative Example 1 | - | - | - | 20 | 68 | NG |
| Comparative Example 2 | - | 80 | 20 | 20 | 93 | OK |

In Table 1, a composition of the heat dissipating coating layer indicates a content (e.g., amount) (wt%) of each component based on a total amount of the heat dissipating coating layer.

Referring to Table 1, if (e.g., when) a relatively high current rapidly flew by connecting the positive and negative electrodes of the rechargeable lithium battery cell of Comparative Example 2 with an external conductor, the substrate tab temperature of the positive electrode reached 93 °C, but in the rechargeable lithium battery cells of Examples 1 to 5, the substrate tab temperature of the positive electrode reached 81 °C or less in substantially the same situation.

Herein, the situation that the relatively high current rapidly flow by connecting the positive and negative electrodes with the external conductor is similar to a situation that rechargeable lithium batteries are extremely rapidly charged and/or operated at a relatively high output.

In one or more embodiments, the rechargeable lithium battery cell of Comparative Example 1 was ignited if (e.g., when) externally pressed in the region where the heat dissipating coating layer was located on the substrate tab of the positive electrode, but the rechargeable lithium battery cells of Examples 1 to 5 were not ignited in substantially the same situation.

Herein, the situation of pressing the region where the heat dissipating coating layer was located on the substrate tab of the positive electrode corresponds to a situation of causing a short circuit by contacting the substrate tab of the positive electrode with the active material layer of the negative electrode.

The electrode according to one or more embodiments represented by Examples 1 to 5 was effectively suppressed or reduced from heat generation and ignition in various situations such as short circuit, rapid charging, and/or relatively high output operation.

Accordingly, an electrode assembly and a rechargeable lithium battery cell including the electrode according to one or more embodiments may exhibit improved safety and reliability.

Referring to Examples 1 to 5, the composition of the heat dissipating coating layer may be suitably changed to control the desired or suitable effect.

While this disclosure has been described in connection with what is presently considered to be practical example embodiments, it is to be understood that present disclosure is not limited to the disclosed embodiments, but, on the contrary, is intended to cover various modifications and equivalent arrangements included within the spirit and scope of the appended claims, and equivalents thereof.

The use of "may" when describing embodiments of the inventive concept refers to "one or more embodiments of the inventive concept."

As used herein, the term "about," and similar terms are used as terms of approximation and not as terms of degree, and are intended to account for the inherent deviations in measured or calculated values that would be recognized by those of ordinary skill in the art. "About" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

A battery management system (BMS) device, and/or any other relevant devices or components according to embodiments of the present invention described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

**Reference Numerals**

| | | | |
|---|---|---|---|
| 100: | rechargeable lithium battery | 10: | positive electrode |
| 11: | positive electrode lead tab | 12: | positive terminal |
| 20: | negative electrode | 21: | negative electrode lead tab |
| 22: | negative terminal | 30: | separator |
| 40: | electrode assembly | 50: | case |
| 60: | sealing member | 70: | electrode tab |
| 71: | positive electrode tab | 72: | negative electrode tab |

## Claims

1. An electrode comprising:
a current collector comprising a substrate and a substrate tab extending from an end of the substrate;
an electrode active material layer on the substrate; and
a heat dissipating coating layer on the substrate tab and comprising a heat dissipating material,
wherein the electrode is for a rechargeable lithium battery (100).

2. The electrode as claimed in claim 1, wherein:
the heat dissipating coating layer concurrently covers a side portion of the electrode active material layer and a portion of an uncoated region of the substrate, and does not cover all of the electrode active material layer; and/or
the heat dissipating coating layer covers concurrently covers a portion of an upper portion of the electrode active material layer, a side portion of the electrode active material layer, and a portion of the uncoated region of the substrate, preferably
wherein the heat dissipating coating layer concurrently covers the portion of the upper portion of the electrode active material layer, the side portion of the electrode active material layer, and the portion of the uncoated region of the substrate, and
a width of the upper portion of the electrode active material layer covered by the heat dissipating coating layer is 0.1 mm to 3 mm.

3. The electrode as claimed in any one of claims 1 or 2, wherein
the heat dissipating material is a conductive material, or
the heat dissipating material is a coating layer comprises a conductive material, a ceramic, and a binder;
preferably wherein the conductive material comprises a carbon-based material, a metal-based material, a conductive polymer, or a combination thereof.

4. The electrode as claimed in claim 3, wherein
the ceramic comprises pseudoboehmite, boehmite, aluminum oxide, silicon dioxide, magnesium oxide, titanium dioxide, hafnium oxide, tin oxide, cerium (IV) oxide, nickel oxide, zinc oxide, calcium oxide, zirconium oxide, yttrium oxide, silicon carbide, or a combination thereof, and/or
wherein the binder comprises a water-insoluble binder, a water-soluble binder, or a combination thereof.

5. The electrode as claimed in claim 3 or 4, wherein
the heat dissipating coating layer comprises, based on 100 wt% of the heat dissipating coating layer,
0.1 wt% to 30 wt% of the conductive material,
30 wt% to 95 wt% of the ceramic, and
1 wt% to 40 wt% of the binder.

6. The electrode as claimed in any one of claims 1 to 5, wherein
a thickness of the heat dissipating coating layer is 0.5 µm to 40 µm.

7. The electrode as claimed in any one of claims 1 to 6, wherein
the electrode active material layer comprises a first electrode active material layer; and
the first electrode active material layer comprises a lithium transition metal composite oxide;
preferably wherein the electrode active material layer further comprises a second electrode active material layer between the substrate and the first electrode active material layer; and
the second electrode active material layer comprises a second electrode active material comprising a lithium iron phosphate-based compound, a lithium manganese iron phosphate-based compound, or a combination thereof.

8. The electrode as claimed in claim 7, wherein
an area of the second electrode active material layer is larger than an area of the first electrode active material layer.

9. The electrode as claimed in claim 7 or 8, wherein
based on a total area of the substrate tab, an area where the second electrode active material layer covers a portion of the substrate tab is greater than 0 area% and less than or equal to 60 area%.

10. The electrode as claimed in any one of the claims 7 to 10, wherein
a width of the second electrode active material layer is 0.1 µm to 3 µm longer than a width of the first electrode active material layer.

11. The electrode as claimed in any one of claims 1 to 10, wherein
a width of the substrate tab is 2 µm to 7 mm.

12. An electrode assembly (40) comprising
a stack in which a negative electrode (20), a separator (30), and a positive electrode (10) are sequentially stacked,
wherein at least one electrode of the negative electrode (20) or the positive electrode (10) is the electrode as claimed in any one of claims 1 to 11, and
wherein the electrode assembly (40) is for a rechargeable lithium battery (100).

13. The electrode assembly (40) as claimed in claim 12, wherein
the positive electrode (10) is the electrode as claimed in any one of claims 1 to 11, and
an area of the negative electrode (20) is larger than an area of the positive electrode (10).

14. A rechargeable lithium battery (100) comprising the electrode assembly (40) as claimed in claim 12 or 13, and an electrolyte.

15. The electrode as claimed in any one of claims 1 to 11, wherein
the lithium transition metal composite oxide comprises lithium nickel-based oxide, lithium cobalt-based oxide, lithium manganese-based oxide, a lithium iron phosphate-based compound, cobalt-free lithium nickel-manganese-based oxide, or a combination thereof.
